# Europäisches Patentamt
## European Patent Office
## Office européen des brevets

(19)

(11) Veröffentlichungsnummer: **0 010 709**
**B1**

(12) ## EUROPÄISCHE PATENTSCHRIFT

(45) Veröffentlichungstag der Patentschrift:
**20.10.82**

(51) Int. Cl.³: **C 08 L 83/04**

(21) Anmeldenummer: **79104075.1**

(22) Anmeldetag: **22.10.79**

(54) **In der Wärme zu Elastomeren härtbare Organopolysiloxanmassen sowie Verfahren zu deren Herstellung.**

(30) Priorität: **02.11.78 DE 2847573**

(43) Veröffentlichungstag der Anmeldung:
**14.05.80 Patentblatt 80/10**

(45) Bekanntmachung des Hinweises auf die Patenterteilung:
**20.10.82 Patentblatt 82/42**

(84) Benannte Vertragsstaaten:
**BE CH DE FR GB IT NL**

(56) Entgegenhaltungen:
**EP-A-0 000 350**
**DE-A-1 945 474**
**FR-A-2 256 225**
**FR-A-2 256 226**
**FR-A-2 285 437**

(73) Patentinhaber: **BAYER AG, Zentralbereich Patente, Marken und Lizenzen, D-5090 Leverkusen 1, Bayerwerk (DE)**

(72) Erfinder: **Steinberger, Helmut, Dr., Dönhoffstrasse 28, D-5090 Leverkusen (DE)**
Erfinder: **Moretto, Hans-Heinrich, Dr., Formesstrasse 13, D-5000 Köln 80 (DE)**
Erfinder: **Michel, Werner, Dr., Am Hahnenweg 1, D-5000 Köln 80 (DE)**
Erfinder: **Kniege, Wilfried, Alte Wipperfürther Strasse 80, D-5060 Bergisch-Gladbach 2 (DE)**

In der Wärme zu Elastomeren härtbare Organopolysiloxanmassen sowie Verfahren zu deren Herstellung

Die vorliegende Erfindung betrifft in der Wärme zu Elastomeren härtbare Massen mit verbesserter Beständigkeit gegen hydrolytischen Abbau auf der Basis von hochviskosen Organopolysiloxanmassen durch Zugabe von Polycarbodiimid-Polysiloxan-Copolymerisaten zu den Organopolysiloxanmassen.

Es ist bekannt, dass Organopolysiloxanelastomere, z.B. Polydimethylsiloxankautschuke, ihre elastomeren Eigenschaften innerhalb eines weiten Temperaturbereiches behalten. Wegen dieser Eigenschaften haben sie zahlreiche Anwendungen gefunden.

Eine Schwierigkeit, die auf dem Gebiet der Siloxanelastomertechnologie jedoch weiterbesteht, ist der Abbau der Polymerstruktur, wenn das Elastomer lange Zeit bestimmten Umweltbedingungen ausgesetzt ist. Beispielsweise erfolgt bei einigen Polysiloxanelastomeren, wenn sie als Dichtungsmaterialien in bestimmten Systemen verwendet werden, der hydrolytische Abbau in einem solchen Ausmass, dass sie ihre elastomeren Eigenschaften stark einbüssen. Unter Ausschluss von Luftsauerstoff verläuft der Abbau so rasch, dass Vulkanisate aus Polydimethylsiloxanpolymer, die beispielsweise in einem geschlossenen Rohr auf 200 °C erhitzt werden, in der Regel bereits nach 3 Tagen völlig zerstört sind.

Es ist zwar bekannt, (vergl. z.B. FR-PS 1 440 466, US-PS 3 031 430), dass gewisse Metalle und Metallverbindungen den hydrolytischen Abbau verzögern und somit im Sinne von Stabilisatoren wirken, z.B. bieten Wismut und Cadmium, in Form einer niedrigschmelzenden Legierung eingearbeitet, einen guten Schutzeffekt, jedoch ist die Verwendung dieser Metalle in Siloxanelastomeren mit Nachteilen behaftet. Ferner ist eine Stabilisierung gegenüber einer Wärmealterung möglich, z.B. durch Zusatz von Eisenoxid oder Eisenhydroxid in geringer Menge (0,001 bis 0,75 Gewichtsteile pro 100 Gewichtsteile Siliconelastomer) oder auch Nickelsalze wie Nickelchlorid,- acetat oder -octoat. Alle diese bekannten Zusatzmittel ergeben jedoch nur eine unzureichende Stabilisierung von Organopolysiloxanpolymeren gegen den hydrolytischen Abbau. Das in der Gummitechnologie zum Schutz bestimmter Elastomere gegen hydrolytischen Abbau verwendete Dicyclohexylcarbodiimid verteilt sich bei Einarbeitung in Siliconkautschuk so schlecht, dass eine Schutzwirkung nicht beobachtet werden konnte.

Aufgabe der vorliegenden Erfindung war es daher, neue vorteilhafte gegen hydrolytischen Abbau beständige Organopolysiloxanelastomere bereitzustellen, die die Temperaturbeständigkeit, die Lösungsmittelbeständigkeit und das mechanische Verhalten von bekannten Polysiloxanelastomeren aufweisen.

Gegenstand der vorliegenden Erfindung sind daher in der Wärme zu Elastomeren mit verbesserter Beständigkeit gegen hydrolytischen Abbau härtbare Massen auf der Grundlage von Organopolysiloxanen, die gekennzeichnet sind durch einen Gehalt an folgenden Bestandteilen

a) Organopolysiloxan-Polymer mit einer Viskosität von 1 000 000 bis 200 000 000 m Pas bei 25 °C der Formeleinheit

$$(R)_a \frac{SiO_{4-a}}{2}$$

wobei R für einen einwertigen Kohlenwasserstoffrest, der gegebenenfalls cyan- oder halogen-substituiert sein kann, steht, und a zwischen 1,95 und 2,01 liegt,

b) Polycarbodiimid-Polysiloxan-Mischpolymerisate oder Polycarbodiimid – Polysiloxan – Mischungen, wobei der Polycarbodiimid-Gehalt von 0,1 bis 70 Gew.-% – bezogen auf Gesamtpolymer – betragen kann,

c) Härtungskatalysatoren und

d) Füllstoffe.

Die erfindungsgemässen in der Hitze zu Elastomeren härtbaren Massen können beispielsweise zusammengesetzt sein aus an sich bekannten hochviskosen Organopolysiloxanen, insbesondere solchen, aus 85 bis 100 Molprozent Methylvinylsiloxan- und/oder Dimethylvinylsiloxaneeinheiten im Gemisch mit verstärkenden und/oder nicht verstärkenden Füllstoffen sowie meist auch Mitteln zur Verminderung der Verstrammung beim Lagern, insbesondere Organosilanolen und/ oder Organosiloxanolen und Härtungsmitteln.

Die Reste R in dem Organopolysiloxan-Polymer oder den Mischungen aus solchen Organopolysiloxan-Polymeren und insbesondere in einem Diorganopolysiloxan-Polymer mit einer Viskosität von 1 000 000 bis 200 000 000 m Pas bei 25 °C sind z.B. ausgewählt aus einwertigen Kohlenwasserstoffresten, halogensubstituierten einwertigen Kohlenwasserstoffresten und Cyanalkylresten. Solche Reste sind z.B. Alkylreste, wie Methyl, Äthyl, Propyl, Cycloalkylreste, wie Cyclohexyl, Cycloheptyl, Alkenylreste wie Vinyl, Allyl, halogensubstituierte Alkylreste, wie Fluorpropyl, Trifluorpropyl und besonders fluorierte Alkylreste der Formel $R^4CH_2CH_2$-, worin $R^4$ ein Perfluoralkylrest ist, einkernige Arylreste, wie Phenyl, Alkarylreste, wie Methylphenyl, Äthylphenyl, Aralkylreste, wie Phenylmethyl, Phenyläthyl, Cyanalkylreste, wie Cyanpropyl usw. sowie andere Substituenten, die üblicherweise als Substituenten bei linearen Diorganopolysiloxanen gefunden werden. Besonders bevorzugt ist die Auswahl der Reste für R aus Alkylresten mit 1 bis 8 Kohlenstoffatomen, Alkenylresten mit 2 bis 8 Kohlenstoffatomen, halogensubstituierten Alkylresten, wie Fluoralkylresten mit 3 bis 8 Kohlenstoffatomen und einkernigen Arylresten.

Als weitere Zusätze werden in der Regel Pigmente, Antioxidantien und Heissluftstabilisierungsmittel auf Basis bekannter Metalloxide verwendet. Beispiele für verstärkende Füllstoffe sind insbesondere pyrogen in der Gasphase erzeugtes Siliziumdioxid, gefälltes Siliziumdioxid mit einer Oberfläche von mindestens 50 m²/g und unter Einhaltung der Struktur entwässerte Kieselsäurehydrogele. Beispiele für nicht verstärkende Füllstoffe sind insbesondere Diatomeenerde, Quarzmehl und Kreide. Ferner eignen sich Titandioxide, Eisenoxid, $A1_2O_3$, $CaCO_3$, Silikate usw.

Beispiele für Härtungsmittel sind Alkyl-, Aryl- oder Acylperoxide einzeln oder in Kombination. Die Härtung der Organopolysiloxanmassen kann aber auch durch Gammastrahlen erfolgen.

Zu den spezifischen Peroxyd-Härtungskatalysatoren, die bevorzugt sind, gehören Di-tertiär-butylperoxyd, tertiär-Butyltriäthylmethylperoxyd, tertiär-Butyltriphenylmethylperoxyd, tertiär-butylperbenzoat und Di-tertiär-alkylperoxyd, wie Dicumylperoxyd. Andere geeignete Peroxyd-Katalysatoren, welche das Härten sowohl über gesättigte als auch ungesättigte Kohlenwasserstoffgruppen an der Silikonkette bewirken, sind Arylperoxyde, die Benzoylperoxyde, gemischte Alkylarylperoxyde, wie tertiär-Butylperbenzoat, Chloralkylperoxyde, wie 1,4-Dichlorbenzoylperoxyd, 2,4-Dichlorbenzoylperoxyd, Monochlorbenzoylperoxyd, Benzoylperoxyd, Methyläthylketonperoxyd, usw. einschliessen. Im allgemeinen werden 0,1 bis 8 Gew.-% des Peroxyds, bezogen auf den Kautschuk, eingesetzt. Vorzugsweise werden 0,5 bis 4 Gew.-% ingesetzt.

Die Auswahl des Vernetzungsmittels richtet sich nach den Verarbeitungsbedingungen. So werden beispielsweise die meisten Peroxide zur Vulkanisation unter Druck bei Temperaturen oberhalb 100 °C eingesetzt. Als Peroxid, das bei Vulkanisation ohne äusseren Überdruck blasen- und porenfreie Vulkanisate liefert, hat sich in der Technik das Bis (2,4-dichlorbenzoyl)-peroxid bewährt.

Da die verwendeten Peroxide zu unterschiedlichen chemischen Stoffklassen gehören, üben auch ihre Zersetzungsprodukte in Siliconkautschuk verschiedene Wirkungen aus, die in der Regel das Eigenschaftsbild des Siliconkautschuks nachteilig beeinflussen. Insbesondere wirken die bei der Zersetzung von Acylperoxiden und Perestern freiwerdenen Säuren beschleunigend auf die Depolymerisation von Silikonpolymeren. Die Ursache hierfür ist eine Verschiebung des pH-Wertes, wodurch der Angriff von Wasser in jeder Form begünstigt wird.

Ein wirksamer Schutz gegen die Verschlechterung des Eigenschaftsbildes von Organopolysiloxankautschukmaterialien unter hydrolytischen Umgebungsbedingungen wird gemäss der vorliegenden Erfindung dadurch erreicht, dass man Siloxanpolymere verwendet, welche Polycarbodiimidgruppen enthalten.

Dieser Befund war insofern überraschend, als sich das Einarbeiten monomerer Carbodiimide, wie z.B. Dicyclohexylcarbodiimid, oder aber auch von Gemischen höhermolekularer Carbodiimide, wie sie in der Kunststoffindustrie als Hydrolyseschutzmittel für bestimmte Polymere auf Polyester- oder Polyätherbasis eingesetzt werden, in Siliconkautschuk als unwirksam erwies.

Darüber hinaus war überraschend, dass die gute Heissluftbeständigkeit von Siliconkautschuk durch die Gegenwart der relativ grossen organischen Reste des Polycarbodiimidanteils nicht verschlechtert wird.

Als Polycarbodiimid-Polysiloxan-Mischpolymerisate kommen modifizierte Polysiloxane in Frage, wie sie z.B. in DE-OS 2 730 743 beschrieben sind. Geeignet sind ferner Materialien, die gemäss DE-OS 2 602 413 hergestellt werden.

Bevorzugt werden solche Mischpolymere eingesetzt, bei denen Polysiloxane und Polycarbodiimid als unterscheidbare Phasen, ggf. mit teilweise chemischer und/oder physikalischer Bindung vorliegen.

Die verbesserten Organopolysiloxan-Massen gemäss der vorliegenden Erfindung sind also Polysiloxane die polycarbodiimidgefüllte Organopolysiloxan-Mischungen, die aus folgenden zwei Phasen zusammengesetzt sind, enthalten: (i) eine zusammenhängende Phase einer Organopolysiloxan-Flüssigkeit und (ii) einer nicht zusammenhängenden Phase aus feinverteilten Teilchen eines Carbodiimid-Polymers, das durch Polykondensation des entsprechenden Monomeren oder Monomerengemisches in Gegenwart des Organopolysiloxanes und eines Carbodiimidierungskatalysators erhalten wurde.

Die polycarbodiimidgefüllten Organopolysiloxan-Massen werden z.B. hergestellt durch intensives Vermischen der Organopolysiloxan-Flüssigkeit mit Di- oder Polyisocyanaten oder Gemischen daraus in Gegenwart eines die Carbodiimidbildung beschleunigenden Katalysators oder durch Vermischen der Organopolysiloxan-Flüssigkeit mit in situ hergestellten und an sich bekannten Polycarbodiimiden. Die Polymermischung besteht zu 3–80 Gew.-%, vorzugsweise 5–70 Gew.-%, aus Polycarbodiimid (bezogen auf die Gesamtmischung).

Anstelle von reinem Polymer auszugehen, kann man Abmischungen aus üblichen Polysiloxanen mit Polycarbodiimid-Polysiloxan-Mischpolymeren einsetzen. Dies kann in der Weise geschehen, dass Polymere untereinander vorvermischt werden und dann mit den bereits erwähnten Füllstoffen und Hilfsmitteln vermischt werden, oder dass eine Vormischung eines üblichen Polysiloxanpolymeren mit Füll- und Hilfsstoffen mit dem Polycarbodiimid-Polymer verschnitten wird oder aber dass Polycarbodiimid-Polysiloxan-Polymer mit Füllstoffen und Hilfsmitteln vorgemischt wird, oder dass Vormischungen aus beiden Arten von Polymeren im gewünschten Verhältnis miteinander verschnitten werden.

Aus dem Gesagten geht hervor, dass die Reihenfolge des Vermischens nicht kritisch ist.

Desgleichen ist auch die Mischtemperatur keinen besonderen Einschränkungen unterworfen. Alle bei Siliconkautschuk üblichen Verfahrensweisen können auch hierauf angewandt werden.

Zur Herstellung der erfindungsgemässen Massen wird ein Polycarbodiimid-Gehalt von 0,1 bis 70 Gew.-%, bezogen auf Gesamtpolymer, eingesetzt, vorzugsweise 1 bis 20 Gew.-%, ganz besonders bevorzugt 6 bis 15 Gew.-%.

Bei höheren Gehalten an Polycarbodiimid im Polymer als 70 Molprozent treten technische Nachteile bezüglich der Verarbeitbarkeit auf, da zur Erzielung eines befriedigenden Vulkanisationsverhaltens entweder unwirtschaftlich grosse Mengen Peroxid eingesetzt werden müssen oder aber das Polymer ein Mehrfaches des üblichen Vinylgruppengehaltes aufweisen muss. Zum anderen bedingt der hohe Gehalt an starren Molekülbausteinen eine Verschlechterung der elastomeren Eigenschaften.

Die erfindungsgemässen Siliconelastomeren sollen anhand der folgenden Beispiele näher erläutert werden.

Es wurden Mischungen der oben erwähnten Art unter den üblichen Bedingungen auf einem Gummimisch-Walzwerk hergestellt.

Die Zusammensetzung der Proben wird in Gew.-Teilen angegeben. Die Vulkanisation der Probekörper erfolgte in einer beheizten Presse.

Die Prüfung der Probekörper wurde nach folgenden Normen vorgenommen:

Festigkeit, Dehnung, Spannungswerte 100 und 300% DIN 53 504

Härte DIN 53 505

Elastizität DIN 53 512

Weiterreissfestigkeit (Crescent) ASTM-D 624 B

## Beispiel 1

Dieses Beispiel erläutert eine Herstellmethode für das Polycarbodiimid-Polysiloxan-Mischpolymer.

Hierzu werden zu 20 kg eines hydroxylgruppenendgestoppten Polydimethylsiloxans mit einer Viskosität von 10 000 m Pas mit einer Rührscheibe mit 400 bis 500 U/min gerührt und auf 70 °C erwärmt. Man gibt 30 g eines 1-Methylphospholinoxid-Isomerengemisches hinzu und dosiert zu dieser Mischung unter ständigem Rühren innerhalb von 2 Stunden in einen gleichmässigen Strom 20 kg eines Isomerengemisches aus 80 Prozent Toluylen-2,4-diisocyanat und 20 Prozent Toluylen-2,6-diisocyanat zu. Das entstehende Kohlendioxid wird abgeleitet. Nach beendeter Zugabe des Isocyanates wird eine Stunde bei gleichbleibender Temperatur nachgerührt und das Produkt anschliessend auf Raumteperatur abgekühlt.

Das Produkt ist eine weisse bis schwach gelbliche, viskose Masse von einer Viskosität von ca. 200 000 m Pas.

## Beispiel 2

Dieses Beispiel beschreibt die Darstellung eines Polycarbodiimid-Polysiloxan-Mischpolymers auf Basis von Diphenylmethan-4,4'-diisocyanat.

750 g Polydimethylsiloxan mit terminalen Hydroxylgruppen und einer Viskosität von 18 000 m Pas werden auf 80 °C erhitzt und 0,6 ml 1-Methyl-Phospholinoxid-Isomerengemisch zugegeben. Innerhalb von 2 Stunden werden bei 80 °C unter stetigem Rühren 750 g Diphenylmethan-4,4'-diisocyanat zudosiert und nach beendeter Zugabe 1 Stunde bei 80 °C nachgerührt. Man erhält ein weisses, homogenes und fliessfähiges Produkt mit einer Viskosität von 330 000 m Pas.

## Beispiel 3 bis 8

Es wird eine Siliconkautschukvormischung auf dem Gummimischwalzwerk hergestellt, indem man in der üblichen Weise zu 100 Teilen eines vinylgruppenhaltigen (0,003% Mol Vinyl-Methylgruppe) Polydimethylsiloxans (4,5 · 10⁶ m Pas (25°) ) 1 Teil Hexamethyldisilazan, 58 Teile einer pyrogenen Kieselsäure mit einer Oberfläche von 200 m²/g und 12,76 Teile eines hydroxylgruppenhaltigen Siliconöles mit 3,1% (Mol) Vinyl-Methyl-Siloxaneinheiten (120 m Pas) mischt.

Diese Vormischung wird in sechs Teile geteilt und jeweils mit Polycarbodiimid-Polysiloxan-Copolymer nach Beispiel 1, Dicyclohexylcarbodiimid und einer 50%igen Bis(2,4-dichlorbenzoyl) peroxidpaste in Siliconöl laut nachstehender Tabelle 1 auf dem Gummiwalzwerk vermischt.

Aus diesen sechs Mischungen werden in einer beheizbaren Presse bei 120 °C Platten von 2 und 6 mm Stärke vulkanisiert. Die Dauer der Vulkanisation beträgt 10 Minuten. Aus diesen Platten werden die Prüfkörper gemäss den oben erwähnten Normen ausgeschnitten. Auf eine Nachvulkanisation in heisser Luft wird verzichtet, damit die Konzentration an Vernetzerspaltprodukten in den Vulkanisaten erhalten bleibt. Dies geschieht, um absichtlich erschwerte Alterungsbedingungen zu schaffen.

Die Prüfung der Probekörper erfolgt gemäss den oben erwähnten DIN- beziehungsweise ASTM-Vorschriften. Ein Teil der Proben wird nach erfolgter Vulkanisation 70 beziehungsweise 120 Stunden bei 200 °C in zugeschmolzenen Glasröhren gealtert und anschliessend gemäss den oben erwähnten DIN-Vorschriften geprüft. Der Fortgang der Hydrolysenalterung wird über die Festigkeitswerte verfolgt.

## Beispiel 9 bis 11

Zu 100 Teilen eines vinylgruppenhaltigen Polydimethylsiloxans (4,5 · 10⁶ m Pas), 1 Teil Hexamethyldisilazan, 58,0 Teilen einer pyrogenen Kieselsäure mit einer Oberfläche von 200 m²/g und 12,8 Teilen eines hydroxylgruppenhaltigen Polydimethylsiloxanöles, 2 Teilen einer 50%igen Anpastung von scharzem Eisenoxidpigment in vinylgruppenhaltigem Polydimethylsiloxan und 0,8 Teilen Bis-tert. butyl- (peroxidiisopropyl) benzol werden im gleichen Arbeitsgang die in der Tabelle 2 aufgeführten Mengen Polycarbodiimid-Polysiloxan-Polymer gemäss Beispiel 1 und eine 50%ige Bis (2,4-dichlorbenzoyl) peroxidpaste auf der Walze vermischt.

Aus diesen Mischungen werden in einer beheizbaren Presse bei 120 bis 180 °C durch Schnellaufheizung während 10 Minuten Platten von 2 und 6 mm Stärke vulkanisiert. Aus diesen Platten werden die Prüfkörper normgemäss ausgeschnitten und entsprechend geprüft. Ein Teil der Proben wird nach erfolgter Vulkanisation während 10 Tagen bei 200 °C mittels Heissluft getempert, ein anderer Teil während 3 Tagen bei 225 °C. Ein weiterer Teil der Proben wird während 70 Stunden im geschlossenen Glasrohr auf 200 °C erwärmt.

Tabelle 1

|  | Beispiel 3 | Beispiel 4 | Beispiel 5 | Beispiel 6 | Beispiel 7 | Beispiel 8 |
|---|---|---|---|---|---|---|
| Vormischung | 100,0 | 100,0 | 100,0 | 100,0 | 100,0 | 100,0 |
| Polycarbodiimid-Siloxan-Copolymer | – | 1,0 | 2,0 | 3,0 | 4,0 | – |
| Dicyclohexylcarbodiimid | – | – | – | – | – | 1,0 |
| Bis (2,4-dichlorbenzoyl peroxidpaste | 1,2 | 1,5 | 1,9 | 2,2 | 2,5 | 1,5 |
| **10'/120 °C Presse** |  |  |  |  |  |  |
| Festigkeit (MPA) | 9,1 | 9,7 | 9,1 | 9,3 | 9,0 | 5,7 |
| Dehnung (%) | 605 | 590 | 535 | 535 | 535 | 620 |
| Modul (100%) | 1,5 | 1,5 | 1,5 | 1,5 | 1,5 | 1,1 |
| Modul (300%) | 3,9 | 4,4 | 4,5 | 4,6 | 4,4 | 2,4 |
| Härte (Shore A) | 60 | 60 | 61 | 57 | 59 | 52 |
| Elastizität (%) | 20 | 24 | 22 | 22 | 23 | 16 |
| Crescent (N/mm) | 33,2 | 31,0 | 29,6 | 30,5 | 27,1 | 35,0 |
| **10'/120 °C Presse + 70 h – 200 °C Reagenzglasalterung** |  |  |  |  |  |  |
| Festigkeit (MPA) | 0,5 | 0,6 | 1,3 | 1,7 | 2,1 | 0,3 |
| Dehnung (%) | – | 20 | 90 | 190 | 220 | – |
| Modul (100%) | – | – | – | 1,5 | 1,5 | – |
| **10'/120 °C Presse + 120 h/200 °C Reagenzglasalterung** |  |  |  |  |  |  |
| Festigkeit | 0,3 | 0,2 | 0,6 | 1,2 | 1,4 | – |
| Dehnung | – | – | – | 65 | 80 | – |

Tabelle 2

|  | Beispiel 9 | Beispiel 10 | Beispiel 11 |
|---|---|---|---|
| Polydimethylsiloxan, vinylgruppenhaltig | 100,0 | 100,0 | 100,0 |
| Hexamethyldisilazen | 1,0 | 1,0 | 1,0 |
| Kieselsäure | 58,0 | 58,0 | 58,0 |
| Polydimethylsiloxan, hydroxygruppenhaltig | 12,8 | 12,8 | 12,8 |
| Eisenoxidpigment | 2,0 | 2,0 | 2,0 |
| Dicumylperoxid | 0,8 | 0,8 | 0,8 |
| Polycarbodiimid-Polysiloxan-Mischpolymer | 4,0 | 4,0 | 6,0 |
| Peroxidpaste lt. Text | 1,4 | 1,8 | 1,4 |
| **Vulkanisation 120–180 °C 10' Dauer** |  |  |  |
| Festigkeit (MPa) | 8,5 | 8,3 | 7,9 |
| Dehnung (%) | 450 | 460 | 450 |
| Modul (100%) | 2,0 | 2,1 | 1,9 |
| Modul (300%) | 5,4 | 5,4 | 5,0 |
| Härte (Shore A) | 63 | 64 | 63 |
| Elastizität (%) | 37 | 31 | 29 |
| Crescent (N/mm) | 18 | 21 | 21 |
| **Vulkanisation 120–180 °C 10' + 10 d/200 °C HL** |  |  |  |
| Festigkeit | 5,2 | 5,4 | 5,0 |
| Dehnung | 250 | 250 | 250 |
| Modul (100%) | 3,1 | 3,2 | 3,1 |
| Härte | 71 | 71 | 72 |
| Elastizität | 23 | 28 | 28 |

Tabelle 2 (Fortsetzung)

|  | Beispiel 9 | Beispiel 10 | Beispiel 11 |
|---|---|---|---|
| Vulkanisation 120–180°C 10′ + 3 d/225°C HL |  |  |  |
| Festigkeit | 4,0 | 4,5 | 4,6 |
| Dehnung | 200 | 240 | 235 |
| Modul (100%) | 2,9 | 3,0 | 3,1 |
| Härte | 69 | 73 | 72 |
| Elastizität | 22 | 24 | 24 |
| Vulkanisation 120–180°C 10′ 70 h/200°C geschl. Reagenzglas |  |  |  |
| Festigkeit | 1,1 | 1,2 | 1,6 |
| Dehnung | 40 | 60 | 70 |

Alle Proben werden im Anschluss an ihre Vulkanisation bzw. ihre darauffolgende Wärmealterung gemäss den DIN-Vorschriften geprüft. Der Fortgang der Hydrolysenalterung wird über die Festigkeitswerte verfolgt.

Beispiel 12 bis 16

Auf dem Gummimischwerk wird in der üblichen Weise eine Siliconkautschukvormischung hergestellt, indem man zu 100 Teilen eines vinylgruppenhaltigen Polydimethylsiloxans $10^7$ m Pas, 27,5 Teile pyrogen erzeugte Kieselsäure mit mehr als 300 m²/g Oberfläche und 6,33 Teile eines Verarbeitungshilfsmittels auf Silanolbasis mischt (40 m Pas; 5 Mol-%-Vinylgruppengehalt).

Diese Vormischung wird in vier Teile geteilt und mit Polycarbodiimid-Polysiloxan-Mischpolymer nach Beispiel 2 sowie einer 50%igen Bis-(2,4-dichlorbenzoyl)-peroxidpaste in Siliconöl laut nachstehender Tabelle 3 auf dem Gummimischwerk vermischt.

Aus diesen Mischungen werden in einer beheizbaren Presse bei 120°C Platten von 2 und 6 mm Stärke bei einer Vulkanisationsdauer von 10 Minuten vernetzt. Die daraus gemäss den entsprechenden Normen ausgeschnittenen Prüfkörper werden entsprechend den Normen geprüft. Ein Teil der Proben wird nach erfolgter Vulkanisation während 10 Tagen bei 200°C einer Heissluftbehandlung unterworfen, ein anderer Teil während 3 Tagen bei 225°C. Ein weiterer Teil der Proben wird während 70 Stunden im geschlossenen Glasrohr auf 200°C erhitzt. Alle Proben werden im Anschluss an ihre Vulkanisation bzw. ihre folgende Wärmebehandlung gemäss den Normvorschriften geprüft. Der Fortgang des hydrolytischen Abbaus wird über die Festigkeitswerte verfolgt.

Tabelle 3

|  | Beispiel 12 | Beispiel 13 | Beispiel 14 | Beispiel 15 |
|---|---|---|---|---|
| Vormischung | 100,0 | 100,0 | 100,0 | 100,0 |
| Polycarbodiimid-Polysiloxan-Mischpolymer | 8,0 | 6,0 | 4,0 | – |
| Peroxidpaste lt. Text | 1,4 | 1,0 | 1,2 | 1,4 |
| Vulkanisation 10′/120°C Presse |  |  |  |  |
| Festigkeit (mPa) | 7,7 | 7,0 | 7,9 | 8,7 |
| Dehnung (%) | 555 | 590 | 545 | 490 |
| Modul (100%) | 1,4 | 1,3 | 1,5 | 1,7 |
| Modul (300%) | 0,7 | 3,1 | 4,0 | 4,7 |
| Härte (Shore A) | 50 | 54 | 59 | 66 |
| Elstizität (%) | 19 | 18 | 20 | 25 |
| Crescent (N/mm) | 35 | 36 | 33 | 32 |
| Vulkanisation 10′/120°C Presse + 10 d/200°C HL |  |  |  |  |
| Festigkeit | 5,2 | 4,7 | 4,7 | 5,1 |
| Dehnung | 310 | 325 | 300 | 270 |

Tabelle 3 (Fortsetzung)

|  | Beispiel 12 | Beispiel 13 | Beispiel 14 | Beispiel 15 |
|---|---|---|---|---|
| Modul (100%) | 2,3 | 2,2 | 2,4 | 2,9 |
| Modul (200%) | 3,7 | 3,3 | 3,6 | 4,3 |
| Härte | 70 | 71 | 73 | 76 |
| Elastizität | 23 | 23 | 25 | 28 |
| Vulkanisation 10'/120°C Presse + 3 d/225°C HL |  |  |  |  |
| Festigkeit | 4,8 | 4,4 | 4,8 | 4,9 |
| Dehnung | 360 | 335 | 310 | 245 |
| Modul (100%) | 2,0 | 2,0 | 2,4 | 2,8 |
| Modul (200%) | 3,0 | 2,9 | 3,6 | 4,2 |
| Härte | 68 | 68 | 69 | 73 |
| Elastizität | 16 | 17 | 17 | 22 |
| Vulkanisation 10'/120°C Presse + 70 h/200°C HL Reagenzglas |  |  |  |  |
| Festigkeit | 2,6 | 2,0 | 1,3 | – |
| Dehnung | 330 | 260 | 105 | – |
| Modul (100%) | 1,1 | 1,2 | 1,3 | – |
| Modul (200%) | 1,6 | 1,6 | – | – |

## Patentansprüche

In der Wärme zu Elastomeren mit verbesserter Beständigkeit gegen hydrolytischen Abbau härtbare Massen auf der Grundlage von Organopolysiloxanen, gekennzeichnet durch einen Gehalt an folgenden Bestandteilen

a) Organopolysiloxan-Polymer mit einer Viskosität von 1 000 000 bis 2 000 000 m Pas bei 25°C der Formeleinheit

$$(R)_a\frac{SiO_{4-a}}{2}$$

wobei
R für einen einwertigen Kohlenwasserstoffrest, der gegebenenfalls cyan- oder halogensubstituiert sein kann, steht, und a zwischen 1,95 und 2,01 liegt,

b) Polycarbodiimid-Polysiloxan-Mischpolymerisate oder Polycarbodiimid - Polysiloxan - Mischungen, wobei der Polycarbodiimid-Gehalt von 0,1 bis 70 Gew.-% – bezogen auf Gesamtpolymer – betragen kann,

c) Härtungskatalysatoren und

d) Füllstoffe.

2. Verfahren zur Herstellung von Massen gemäss Anspruch 1, dadurch gekennzeichnet, dass man der Mischung aus Organopolysiloxan, Härtungskatalysator, Füllstoffe sowie gegebenenfalls weiteren an sich bekannten Bestandteilen, von 0,1 bis 70 Gew.-% bezogen auf Gesamtpolymer Polycarbodiimid in Form von Polycarbodiimid-Polysiloxanmischpolymerisaten zusetzt.

## Claims

1. Compositions which are heat-curable to give elastomers with improved resistance to hydrolytic degradation and are based on organopolysiloxanes, characterised in that they contain the following constituents

a) an organopolysiloxane polymer having a viscosity of 1 000 000 to 200 000 000 mPas at 25°C and comprising the structural unit

$$(R)_a\frac{SiO_{4-a}}{2}$$

wherein
R represents a monovalent hydrocarbon radical which can optionally be cyano- or halogensubstituted, and a is between 1.95 and 2.01,

b) polycarbodiimide-polysiloxane copolymers or polycarbodiimidepolysiloxane mixtures, it being possible for the polycarbodiimide content to be from 0.1 to 70% by weight – relative to total polymer,

c) curing catalysts and

d) fillers.

2. Process for the preparation of compositions according to claim 1, characterised in that from 0.1 to 70% by weight, relative to total polymer, of polycarbodiimide in the form of polycarbodiimidepolysiloxane copolymers are added to the mixture of organopolysiloxane, curing catalyst, fillers and optionally other constituents which are in themselves known.

## Revendications

1. Masses durcissables par la chaleur en élastomères ayant une meilleure résistance envers la dégradation hydrolytique, à base d'organopolysiloxanes, caractérisées par une teneur en constituants suivants:

a) polymère d'organopolysiloxane ayant une viscosité de 1 000 000 à 200 000 000 m Pas à 25°C avec unité de formule

$$(R)_a \frac{SiO_{4-a}}{2}$$

où

R représente un radical hydrocarboné monovalent qui peut éventuellement être cyano- ou halo-substitué, et a est compris entre 1,95 et 2,01,

b) copolymères polycarbodiimide-polysiloxane ou mélanges de polycarbodiimide-polysiloxane, la teneur en polycarbodiimide pouvant s'élever à 0,1 – 70% en poids par rapport au polymère total,

c) catalyseurs de durcissement et

d) matières de charge.

2. Procédé de fabrication des masses selon la revendication 1, caractérisé en ce que l'on ajoute au mélange d'organopolysiloxane, de catalyseur de durcissement, de matières de charge et éventuellement d'autres constituants connus en eux-mêmes, 0,1 – 70% en poids par rapport au polymère total de polycarbodiimide sous forme de copolymères polycarbodiimide-polysiloxane.